# NEUE EUROPÄISCHE PATENTSCHRIFT

(11) **EP 2 613 995 B2**
(45) Veröffentlichungstag und Bekanntmachung des Hinweises auf die Entscheidung über den Einspruch: **12.04.2023**
(45) Hinweis auf die Patenterteilung: 21.12.2016
(21) Anmeldenummer: 11748276.0
(22) Anmeldetag: 19.08.2011
(51) Int. Cl.: B62D 65/18

(54) **ANLAGE ZUR OBERFLÄCHENBEHANDLUNG VON FAHRZEUGKAROSSERIEN**
SURFACE TREATMENT PLANT FOR MOTOR VEHICLE BODIES
INSTALLATION DE TRAITEMENT DE SURFACE DE CARROSSERIES DE VÉHICULES

(30) Priorität: 10.09.2010 DE 102010045014
(43) Veröffentlichungstag der Anmeldung: 17.07.2013
(73) Patentinhaber: Eisenmann GmbH, 71032 Böblingen (DE)
(72) Erfinder: ROBBIN, Jörg, 72119 Ammerbuch (DE); HENNIG, Thomas, 70565 Stuttgart (DE); HANF, Jürgen, 72070 Tübingen (DE)
(74) Vertreter: Ostertag & Partner Patentanwälte mbB
(86) Internationale Anmeldenummer: PCT/EP2011/004177
(87) Internationale Veröffentlichungsnummer: WO 2012/031678

(56) Entgegenhaltungen:
- GB-A- 2 439 903
- US-A- 5 115 758
- US-A1- 2009 013 524

## Beschreibung

Die Erfindung betrifft eine Anlage zur Oberflächenbehandlung von Fahrzeugkarosserien mit
a) einer ersten Behandlungszone, welche ein erstes Fördersystem umfasst, mittels welchem eine Fahrzeugkarosserie durch die erste Behandlungszone förderbar ist;
b) einer zweiten Behandlungszone, welche ein zweites Fördersystem umfasst, welches von dem ersten Fördersystem verschieden ist und mittels welchem die Fahrzeugkarosserie durch die zweite Behandlungszone förderbar ist,
   wobei
c) eine Übergabeeinrichtung vorhanden ist, mittels welcher die Fahrzeugkarosserie von dem ersten Fördersystem an das zweite Fördersystem übergeben werden kann;
d) die Übergabeeinrichtung Tragmittel umfasst, welche an Bereichen der Fahrzeugkarosserie angreifen, von denen insbesondere wenigstens einer am tiefsten Punkt der horizontal und Dach oben ausgerichteten Fahrzeugkarosserie angeordnet ist.

Außerdem betrifft die Erfindung ein Verfahren zum Fördern von Fahrzeugkarosserien durch eine Anlage zur Oberflächenbehandlung, bei welchem eine Fahrzeugkarosserie mittels eines ersten Fördersystems durch eine erste Behandlungszone und mittels eines zweiten Fördersystems, welches von dem ersten Fördersystem verschieden ist, durch eine zweite Behandlungszone gefördert wird,
wobei
die Fahrzeugkarosserie mit einer Übergabeeineinrichtung von dem ersten Fördersystem an das zweite Fördersystem übergeben wird;
wobei mit Tragmitteln der Übergabeeinrichtung an Bereichen der Fahrzeugkarosserie angegriffen wird, von denen insbesondere wenigstens einer am tiefsten Punkt der horizontal und Dach oben ausgerichteten Fahrzeugkarosserie angeordnet ist.

Fahrzeugkarosserien werden nach dem Rohbau einer Oberflächenbehandlung unterzogen, welche insgesamt verhältnismäßig viele einzelne Behandlungsschritte umfasst. Infolgedessen umfasst eine Oberflächenbehandlungsanlage für Fahrzeugkarosserien viele verschiedene Behandlungszonen, die von den zu behandelnden Fahrzeugkarosserien in einer festen Abfolge durchlaufen werden müssen.

Bei vom Markt her oder aus der US 5,115,758 bekannten Oberflächenbehandlungsanlagen werden die Fahrzeugkarosserien in verschiedenen Behandlungszonen mit unterschiedlichen, an die jeweilige Behandlung angepassten Fördersystemen gefördert.

Die Übergabeeinrichtung greift unmittelbar an einer zu übergebenden Fahrzeugkarosserie an und eröffnet die Möglichkeit, dass aufeinander folgenden Behandlungszonen mit bezogen auf die Karossenaufnahme unterschiedlich arbeitenden Fördersystemen ausgestattet sind. So kann ein Trockner beispielsweise auf schlankeren Skids mit weniger Energieaufnahme oder gar ohne Skids von den Fahrzeugkarosserien durchlaufen werden. Zumindest in einzelnen Behandlungszonen oder deren Bereichen kann auf Förderskids verzichtet werden.

Eine Behandlungszone kann auch mehrere Behandlungsbereiche umfassen, in denen zwar verschiedene Behandlungsarten durchgeführt werden können, das Fördersystem sich jedoch nicht ändert. Solange die Fahrzeugkarosserien mit ein und demselben Fördersystem durch aufeinander folgende Behandlungsbereiche gefördert werden, zählen diese zu einer Behandlungszone.

Eine Oberflächenbehandlungsanlage für Fahrzeugkarosserien umfasst beispielsweise folgende Behandlungszonen BZ, die gegebenenfalls in mit BB gekennzeichnete Behandlungsbereiche unterteilt sind und zwischen denen jeweils ein Übergabebereich angeordnet ist:
BZ-1
   BB-1 Vorbehandlung (ein oder mehrere Tauchbecken)
   BB-2 Kataphoretische Tauchlackierung (KTL)
Übergabebereich
BZ-2 KTL-Trockner
Übergabebereich
BZ-3
   BB-1 KTL-Audit
   BB-2 KTL-Schleifen
   BB-3 Nahtabdichten
Übergabebereich
BZ-4 Unterbodenschutz
Übergabebereich
BZ-5 Füller
Übergabebereich
BZ-6 Füller-Trockner
Übergabebereich
BZ-7
   BB-1 Füller-Audit
   BB-2 Füller-Schleifen
Übergabebereich
BZ-8 Decklack
Übergabebereich
BZ-9 Decklack-Trockner
Übergabebereich
BZ-1
   BB-1 Decklack-Audit
   BB-2 Spot-Repair
   BB-3 Hohlraumkonservierung.

In einem jeweiligen Übergabebereich wird die Fahrzeugkarosserie von dem Fördersystem einer ersten Behandlungszone an das davon verschiedenen Fördersystem einer darauf folgenden zweiten Behandlungszone übergeben.

Bei vom Markt her bekannten Oberflächenbehandlungsanlagen werden die Fahrzeugkarosserien auf sogenannten Skids befestigt und durch die einzelnen Behandlungszonen gefördert. Hierbei wird der Skid mit der Fahrzeugkarosserie normalerweise von einem ersten Fördersystem an ein zweites Fördersystem übergeben, die zwar beide mit dem Skid zusammenarbeiten, aber dennoch baulich unterschiedlich sind, da unterschiedliche Behandlungszonen meist auch verschiedene Fördersysteme verlangen. Als Beispiele hierfür seien eine Elektrohängebahn für eine Tauchbehandlung und ein Kettenförderer für einen Trockenvorgang genannt.

In den einzelnen Behandlungszonen erfährt ein solcher Skid zumeist die gleiche Behandlung, wie die auf ihm befestigte Fahrzeugkarosserie. So wird ein Skid z.B. in der oben mit BZ-1 bezeichneten ersten Behandlungszone zusammen mit der Fahrzeugkarosserie durch die vorhandenen Tauchbecken geführt. Die Behandlungsflüssigkeit wird somit teilweise auch für die Skids verbraucht.

Auch den sich daran anschließenden KTL-Trockner in der Behandlungszone BZ-2 durchquert die Fahrzeugkarosserie auf einem Skid. Somit wird mit jeder Fahrzeugkarosserie jedes Mal auch der zugehörige Skid aufgeheizt, um ihn danach wieder mit der Fahrzeugkarosserie abzukühlen zu lassen. Hierdurch wird bei jedem Trockenvorgang ein beträchtlicher Energieanteil zum Aufheizen des Skids verbraucht.

In Behandlungszonen, in denen der Skid keine unmittelbare Materialbehandlung erfährt, muss dieser dennoch mit der Fahrzeugkarosserie mitgeführt werden. Die zu fördernde Gesamtmasse von Fahrzeugkarosserie und Skid ist damit beträchtlich höher als die Masse einer Fahrzeugkarosserie allein. Beispielsweise wird eine Fahrzeugkarosserie mit einem Gewicht von etwa 400 kg auf einem Skid gefördert, der etwa 150 kg wiegt. Da größere Massen bewegt werden müssen, muss für den Transport von Fahrzeugkarosserie und Skid auch mehr Energie aufgewendet werden als für eine Fahrzeugkarosserie alleine.

Insgesamt ist bei den üblichen Fördertechniken von Fahrzeugkarosserien mit Skid die Gesamtenergiebilanz im Hinblick auf die zu behandelnden Fahrzeugkarosserien verschlechtert und die Gesamtbetriebskosten der Anlage somit erhöht.

Es ist daher Aufgabe der Erfindung, eine Anlage und ein Verfahren der eingangs genannten Art zu schaffen, die diesen Gedanken Rechnung tragen.

Diese Aufgabe wird bei einer Anlage der eingangs genannten Art dadurch gelöst, dass
e) das erste Fördersystem und/oder das zweite Fördersystem derart eingerichtet sind, dass sie die Fahrzeugkarosserie ohne eine separate Tragstruktur für die Fahrzeugkarosserie fördern.

Wenn das erste Fördersystem mit Skids funktioniert, das zweite Fördersystem die Fahrzeugkarosserie jedoch ohne Skid bewegen kann, so kann durch die Übergabeeinrichtung eine Fahrzeugkarosserie von dem Skid abgenommen und dem zweiten Fördersystem zugeführt werden.

Wenn umgekehrt das erste Fördersystem ohne Skids arbeitet, das zweite Fördersystem die Fahrzeugkarosserie jedoch mit Skids fördern soll, so kann durch die Übergabeeinrichtung eine Fahrzeugkarosserie aus der ersten Behandlungszone aufgenommen und an einen Skid des zweiten Fördersystems übergeben werden.

Der größte Vorteil wird jedoch erreicht, wenn sowohl das erste als auch das zweite Fördersystem die Fahrzeugkarosserie ohne eine separate Tragstruktur für die Fahrzeugkarosserie fördern. Die gesamte Förderung durch die erste Behandlungszone und die zweite Behandlungszone erfolgt dann ohne Skid. Im besten Fall ist dies für alle Fördersysteme aller aufeinander folgenden Behandlungszonen der Anlage gewährleistet.

Heutige Fahrzeugkarosserien werden bereits mit Koppelbauteilen hergestellt, die auf die Skidtechnik abgestimmt sind. Diese Koppelbauteile der Fahrzeugkarosserien arbeiten mit entsprechend angepassten Verriegelungselementen an den Skids zusammen, die an und für sich bekannt sind und über welche eine Fahrzeugkarosserie an einem Skid befestigt wird.

Wenn nun das erste und/oder das zweite Fördersystem ohne separate Tragstruktur, insbesondere ohne Skid, fördert, ist es besonders günstig, wenn das erste Fördersystem und/oder das zweite Fördersystem Koppelelemente umfassen, die mit Koppelbauteilen der Fahrzeugkarosserie zusammenarbeiten. Die bereits vorhandenen Koppelmöglichkeiten an der Fahrzeugkarosserie können so genutzt werden.

In der Praxis hat es sich als vorteilhaft erwiesen, wenn die Tragmittel der Übergabeeinrichtung derart eingerichtet sind, dass sie mit Bodenbereichen der Dach oben ausgerichteten Fahrzeugkarosserie zusammenarbeiten, die nicht von dem ersten Fördersystem oder dem zweiten Fördersystem genutzt werden. Auf diese Weise können das erste und das zweite Fördersystem die gleichen Koppelbereiche oder Koppelbauteile nutzen und entsprechende Bauteile der Fördersysteme können gleich oder baulich ähnlich gefertigt werden.

Eine sichere Förderung der Fahrzeugkarosserien ist sichergestellt, wenn die Übergabeeinrichtung ein Tragschienensystem und einen darauf ablaufenden Fahrwagen umfasst, der die Tragmittel für die Fahrzeugkarosserie mit sich führt.

Wenn die vertikale Position der Tragmittel einstellbar ist, kann eine Fahrzeugkarosserie vorteilhaft mittels der Übergabeeinrichtung z.B. von dem ersten Fördersystem abgehoben und auf das zweite Fördersystem abgesenkt werden.

Das Tragschienensystem der Übergabeeinrichtung kann z.B. als Rollenbahnförderer ausgebildet sein und der Fahrwagen ein dazu komplementäres Fahrwerk umfassen.

In diesem Fall kann es günstig sein, wenn der Rollenbahnförderer in einem Abstand zum Boden angeordnet ist und das Fahrwerk mit einem Fördergehänge gekoppelt ist, welches seinerseits die Tragmittel für die Fahrzeugkarosserie umfasst.

Im Hinblick auf die oben erwähnte Möglichkeit, die vertikale Position der Tragmittel einzustellen, ist es in diesem Fall günstig, wenn zumindest ein Abschnitt des Rollenbahnförderers mittels einer Hub-/Senkeinrichtung zwischen einer oberen und einer unteren Arbeitsposition verfahrbar ist.

Alternativ kann das Tragschienensystem der Übergabeeinrichtung ein Bodenschienensystem und der Fahrwagen ein darauf ablaufender Schlittenwagen sein.

Dann führt der Schlittenwagen vorzugsweise eine Hub-/Senkeinrichtung mit sich, durch welche die vertikale Position der Tragmittel einstellbar ist.

Es ist zudem von Vorteil, wenn die horizontale Position der Tragmittel gegenüber dem Schlittenwagen einstellbar ist.

Wenn die Tragmittel als Gabelelement mit wenigstens zwei Tragzinken ausgebildet ist, kann die Übergabeeinrichtung so nach dem Prinzip eines Gabelstaplers arbeiten.

Die oben genannte Aufgabe wird bei dem Verfahren der eingangs genannten Art dadurch gelöst, dass die Fahrzeugkarosserie mittels des ersten Fördersystems und/oder mittels des zweiten Fördersystems ohne eine separate Tragstruktur für die Fahrzeugkarosserie gefördert wird.

Die Vorteile entsprechen den oben zur Anlage erläuterten Vorteilen.

Entsprechend ist es günstig, wenn die Fahrzeugkarosserie mittels des ersten Fördersystems und/oder mittels des zweiten Fördersystems ohne eine separate Tragstruktur für die Fahrzeugkarosserie gefördert wird.

Ebenfalls ist es aus den oben im gleichen Zusammenhang genannten Gründen vorteilhaft, wenn mittels der Tragmittel der Übergabeeinrichtung an Bodenbereichen der Dach oben ausgerichteten Fahrzeugkarosserie angegriffen wird, die nicht von dem ersten Fördersystem oder dem zweiten Fördersystem genutzt werden.

Nachfolgend werden Ausführungsbeispiele der Erfindung anhand der Zeichnungen näher erläutert. In diesen zeigen:

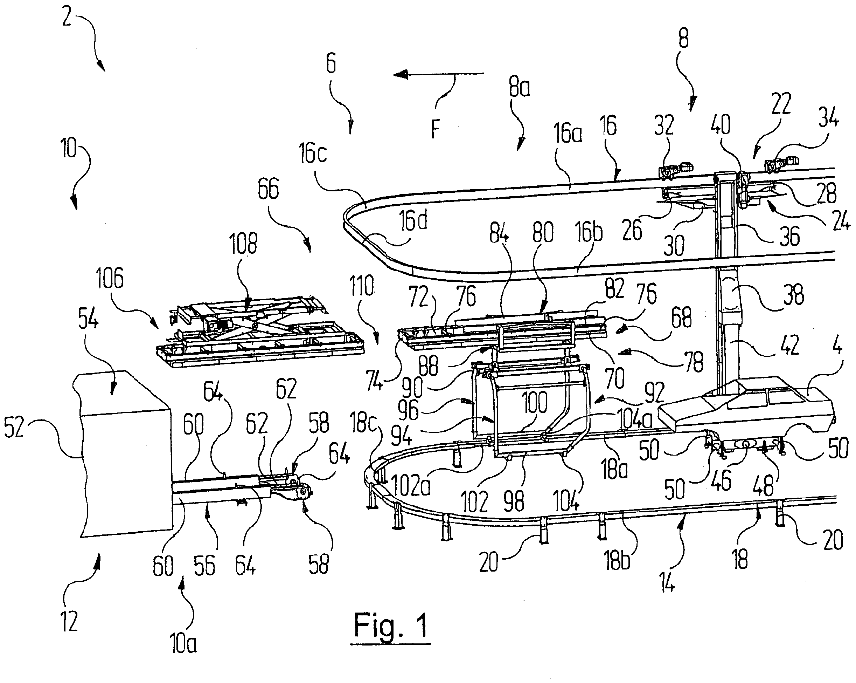

- Figuren 1 bis 5: als erstes Ausführungsbeispiel einen Übergabebereich einer Oberflächenbehandlungsanlage für Fahrzeugkarosserien zwischen zwei Behandlungszonen in jeweils einer perspektivischen Ansicht, wobei fünf Phasen der Übergabe einer Fahrzeugkarosserie von der einen Behandlungszone an die andere Behandlungszone durch eine Übergabeeinrichtung einer ersten Art gezeigt sind;

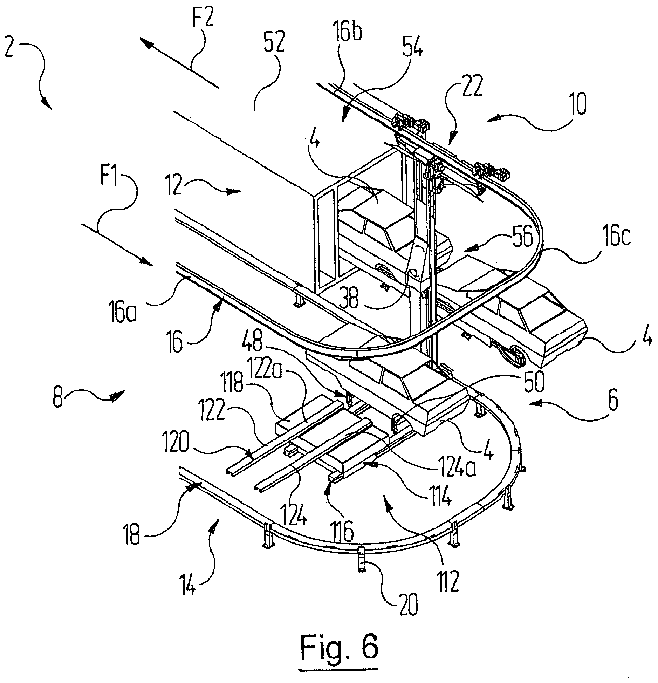

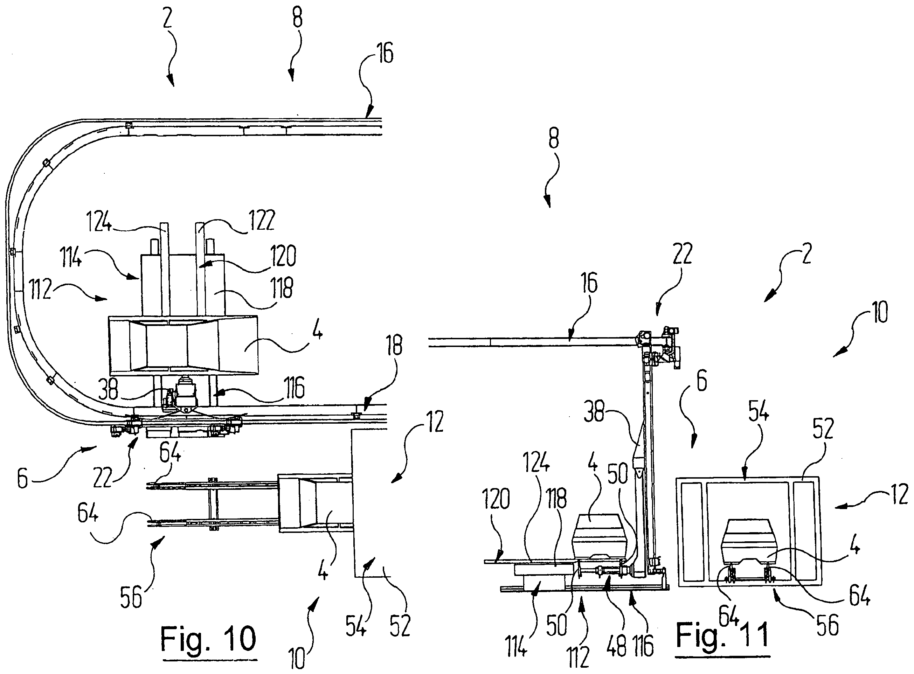

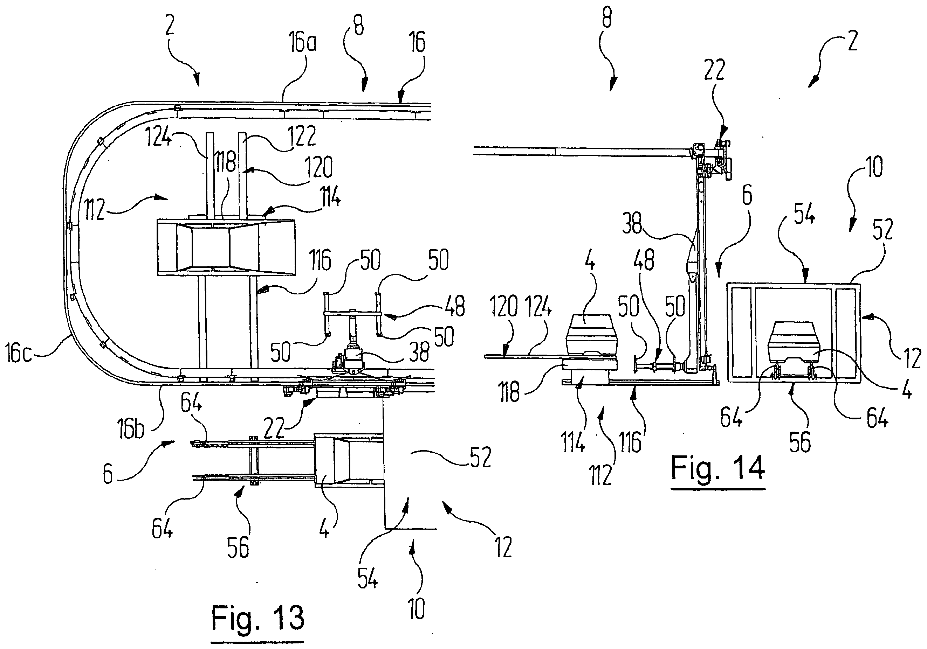

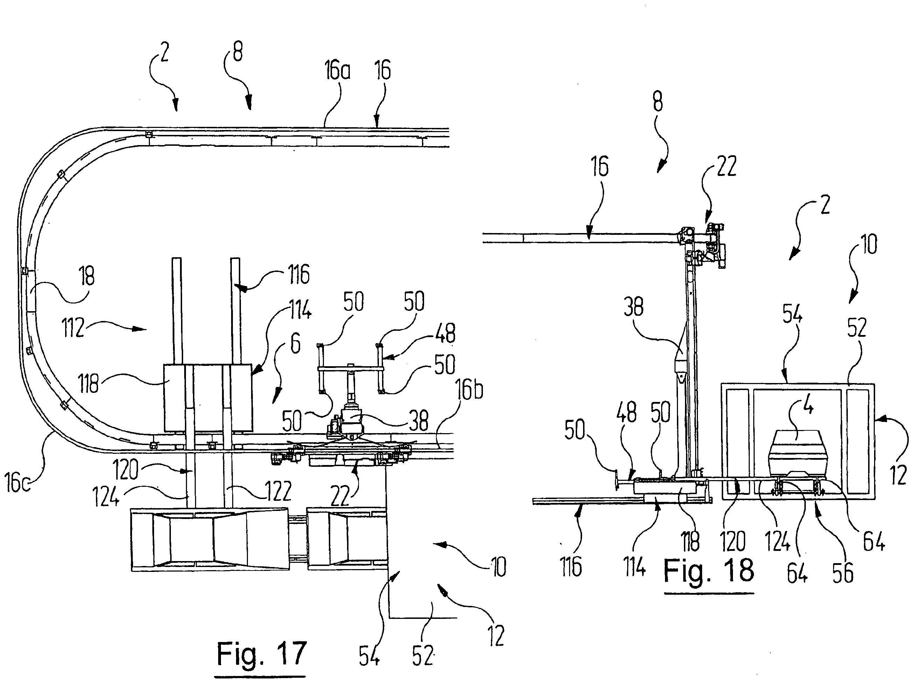

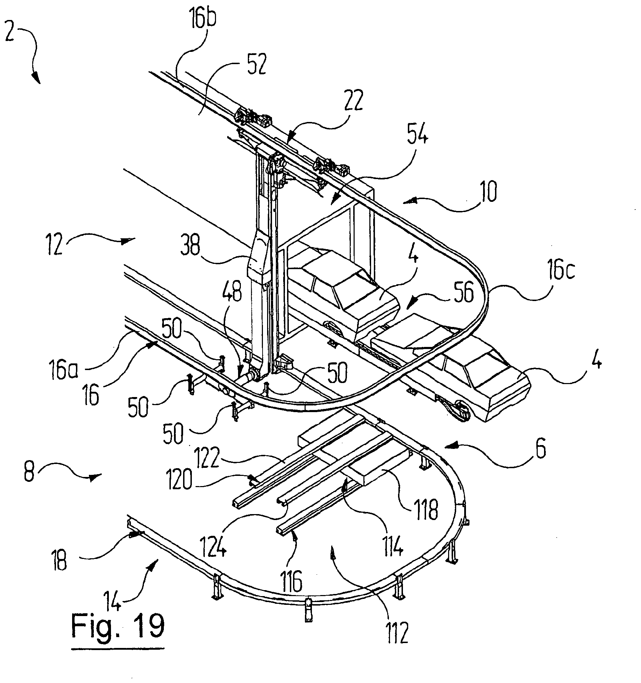

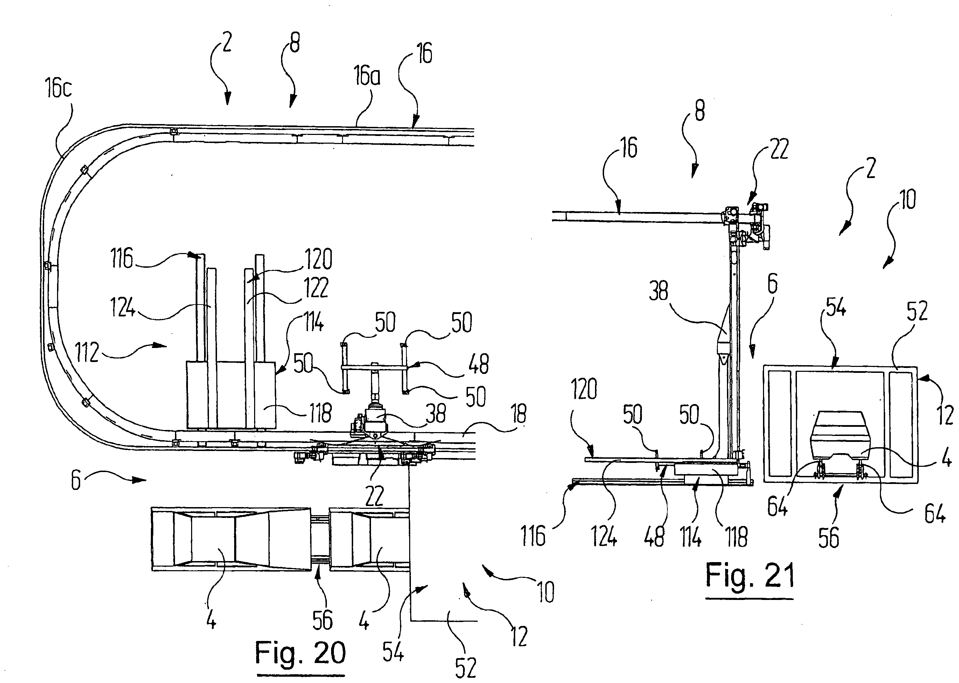

- Figuren 6 bis 21: als zweites Ausführungsbeispiel einen Übergabebereich der Oberflächenbehandlungsanlage für Fahrzeugkarosserien zwischen zwei Behandlungszonen, wobei sechs Phasen der Übergabe einer Fahrzeugkarosserie von der einen Behandlungszone an die andere Behandlungszone durch eine Übergabeeinrichtung einer zweiten Art gezeigt sind.

Bei dem in den Figuren 1 bis 5 gezeigten ersten Ausführungsbeispiel ist mit 2 insgesamt eine Anlage zur Oberflächenbehandlung von Fahrzeugkarosserien 4 bezeichnet, von der lediglich ein Übergabebereich 6 zwischen einer ersten Behandlungszone 8 und einer zweiten Behandlungszone 10 gezeigt ist.

Die erste Behandlungszone 8 ist eine Tauchbehandlungszone und umfasst beim hier gezeigten Ausführungsbeispiel einen Vorbehandlungsbereich und einen Bereich für eine kataphoretische Tauchlackierung, deren Tauchbecken jedoch nicht eigens gezeigt sind. Die Tauchbehandlungszone 8 entspricht somit der eingangs erläuterten Behandlungszone BZ1. Details einer entsprechenden Vorbehandlung und kataphoretischen Tauchlackierung sind allgemein bekannt und werden hier nicht näher erläutert. In den Figuren 1 bis 5 ist lediglich ein Auslaufbereich 8a der Tauchbehandlungszone 8 gezeigt, zu dem eine Fahrzeugkarosserie 4 gelangt, nachdem sie die entsprechenden Tauchbecken durchquert hat.

Die zweite Behandlungszone 10 ist eine Trockenzone, von der in den Figuren 1 bis 5 lediglich ein Eingangsbereich 10a gezeigt ist. Die Trockenzone 10 entspricht somit der eingangs angegebenen Behandlungszone BZ2 und umfasst einen Trockner 12, auf welchen weiter unten nochmals eingegangen wird.

Die Fahrzeugkarosserien 4 werden mittels eines ersten Fördersystems 14 durch die erste Behandlungszone 8 und dabei durch deren Tauchbecken gefördert. Das Fördersystem 14 ist beim vorliegenden Ausführungsbeispiel ein Hängeförderer nach Art einer Elektrohängebahn und umfasst eine lastaufnehmende Antriebsschiene 16 mit einem I-Profil, wie sie auch bei herkömmlichen Elektrohängebahnen eingesetzt wird. Die Antriebsschiene 16 ist an einer nicht eigens gezeigten Deckenkonstruktion angebracht. Von der Antriebsschiene 16 sind in den Figuren 1 bis 5 jeweils zwei gegenüberliegend und parallel zueinander verlaufende geradlinige Abschnitte 16a, 16b zuerkennen, die über einen Verbindungsabschnitt 16c miteinander verbunden sind, der seinerseits zwei Kurvenabschnitte und einen dazwischen verlaufenden geradlinigen Abschnitt umfasst. Letzterer ist nur in Figur 1 mit 16d bezeichnet. Unterhalb der Antriebsschiene 16 verläuft parallel zu dieser eine Führungsschiene 18 mit entsprechenden Abschnitten 18a, 18b, 18c, die auf Lagerböcken 20 befestigt ist und ein nach unten offenes U-Profil ausbildet.

Das erste Fördersystem 14 umfasst ferner mehrere Transportwagen 22, von denen in den Figuren 1 bis 5 nur jeweils einer gezeigt ist. Der Transportwagen 22 umfasst einen Antriebswagen 24, der auf der Antriebsschiene 16 abläuft. Bei dem Antriebswagen 24 handelt es sich im Grundsatz um eine Konstruktion, die von herkömmlichen Elektrohängebahnen her bekannt ist. Der Antriebswagen 24 besitzt zwei Fahrwerke 26, 28, die über einen Verbindungsrahmen 30 miteinander verbunden sind. Der Verbindungsrahmen 30 trägt in bekannter Weise Steuerkomponenten, welche mit einer zentralen Steuerung kommunizieren können. Auf diese Weise ist eine weitgehend unabhängige Bewegung der verschiedenen Transportwagen 22 möglich.

Die Fahrwerke 26 und 28 sind in bekannter Weise mit Führungs- und Tragrollen ausgestattet, die hier nicht eigens mit einem Bezugszeichen versehen sind und an verschiedenen Flächen des I-förmigen Profils der Antriebsschiene 16 abrollen. Jeweils mindestens eine der Rollen der Fahrwerke 26, 28 dient als Antriebsrolle und ist hierzu durch einen Elektromotor 32 bzw. 34 drehbar.

Der Verbindungsrahmen 30 trägt ein sich vertikal nach unten erstreckendes Trag- und Führungsprofil 36 für einen Schlitten 38. Dieses Profil 36 trägt an seinem vom Antriebswagen 24 abliegenden unteren Ende eine nicht zu erkennende Führungsrolle, die in dem U-Profil der Führungsschiene 18 abrollt. Hierdurch ist das Trag- und Führungsprofil 36 sicher in seiner vertikalen Ausrichtung geführt und ein Verkippen des Trag- und Führungsprofils 36 aus der Vertikalen verhindert.

Der Schlitten 38 ist in dem Trag- und Führungsprofil 36 verfahrbar gelagert und kann mittels eines Stellmotors 40 und zugehöriger Antriebskomponenten, wie sie an und für sich bekannt sind, entlang des Profils 36 nach oben und unten verfahren werden.

Der Schlitten 38 trägt ein Verbindungsprofil 42, welches vom Schlitten 38 vertikal nach unten und parallel zum Trag- und Führungsprofil 36 abragt. Am vom Schlitten 38 abliegenden Ende 44 des Verbindungsprofils 42 ist ein Drehzapfen 46 gelagert, der eine horizontale Drehachse definiert. Der Drehzapfen 46 kann über einen von den Schlitten 38 mitgeführten und nicht sichtbaren Getriebemotor, welcher mit den oben erwähnten Steuerkomponenten des Transportwagen 22 kommuniziert, in an und für sich bekannter Weise in beide Drehrichtungen um die horizontale Drehachse verdreht werden.

Der Drehzapfen 46 ist seinerseits starr mit einer Trageinheit 48 für die Fahrzeugkarosserie 4 verbunden, so dass diese jeder Drehbewegung des Drehzapfens 46 folgt. Wenn die Trageinheit 48 horizontal ausgerichtet ist, bilden der Schlitten 38, das Verbindungsprofil 42 und die Trageinheit 48 gemeinsam eine Art L-Bügel, dessen kurzer Schenkel durch den Drehzapfen 46 und die Trageinheit 48 vorgegeben ist.

Die Trageinheit 48 umfasst eine Befestigungseinrichtung in Form von vier Verriegelungsbolzen 50, die als Koppelelemente dienen und jeweils eine Klemmkonus aufweisen. Dieser arbeitet mit einem jeweils zugehörigen Koppelbauteil der Fahrzeugkarosserie zusammen, welches hierzu eine Eingreiföffnung für den Klemmkonus aufweist. Solche Verriegelungsbolzen sind üblicherweise auf einen Förderskid für Fahrzeugkarosserien vorgesehen. Die Funktionsweise solcher Verriegelungsbolzen im Zusammenspiel mit einer Fahrzeugkarosserie ist aus dem Stand der Technik bekannt, so dass auf nähere Erläuterungen hierzu verzichtet werden kann.

Wenn eine Fahrzeugkarosserie 4 über die Verriegelungsbolzen 50 an der Trageinheit 48 befestigt ist, kann diese um jeden Winkel verdreht werden, wobei die Fahrzeugkarosserie 4 stets sicher mit der Trageinheit 48 verbunden bleibt. Auf diese Weise kann die Fahrzeugkarosserie 4 sogar um 180° gegenüber der Normallage verdreht Dach unten transportiert werden. Die Fahrzeugkarosserie 4 jedenfalls wird mittels des Hängeförderers 14 ohne Skid gefördert.

Im Verfahrensablauf der Oberflächenbehandlung der Fahrzeugkarosserie 4 schließt sich an die Tauchbehandlungszone 8 die bereits erwähnte Trockenzone 10 mit dem Trockner 12 an. Der Trockner 12 umfasst ein Trocknergehäuse 52, welches einen Trockentunnel begrenzt. Am in den Figuren 1 bis 5 zu erkennenden Eingangsbereich 10a des Trockners 12 ist eine Eingangsschleuse 54 vorhanden. Am in den Figuren 1 bis 5 nicht gezeigten gegenüberliegenden Ausgangsende ist in entsprechender Weise eine Ausgangsschleuse vorgesehen. Fahrzeugkarosserien 4 werden mittels eines zweiten Fördersystems 56 im Durchlauf durch das Trocknergehäuse 52 gefördert.

Hierzu ist das zweite Fördersystem 56 beim vorliegenden Ausführungsbeispiel als Kettenförderer ausgebildet und umfasst zwei im Wesentlichen baugleiche Endlosketten 58, die parallel nebeneinander umlaufen und durch jeweils ein Führungsprofil 60 geführt sind. Die beiden Endlosketten 58 bieten so jeweils ein oben laufendes Fördertrum 62. Jede Endloskette 58 führt als Koppelelemente Auflagebolzen 64 mit sich, die vertikal nach oben von dem Fördertrum 62 abragen und beim Umlauf der Endloskette 58 mitbewegt werden. In den Figuren 1 bis 5 ist jeweils nur der Eingangsbereich des Kettenförderers 56 vor seinem Eintritt in das Trocknergehäuse 52 zu erkennen.

Die Auflagebolzen 64 sind in ihren Abmessungen und ihrer Anordnung an den Endlosketten 58 so an die zu behandelnden Fahrzeugkarosserien 4 angepasst, dass sie mit deren Koppelbauteilen zusammenarbeiten können, die auch für die Verriegelungsbolzen 50 des ersten Fördersystems 14 ausgelegt sind. Die Anordnung von jeweils vier Auflagebolzen 64, von denen jeweils zwei von einer Endloskette 58 geführt werden, stimmt also mit der Anordnung der vier Verriegelungsbolzen 50 der Trageinheit 48 des ersten Fördersystems 14 überein.

Im Unterschied zu den Verriegelungsbolzen 50 dienen die Auflagebolzen 64 der Endlosketten 58 jedoch lediglich als Auflagepunkte, ohne dass die Fahrzeugkarosserie 4 fest mit der jeweiligen Endloskette 58 verbunden werden muss. Auch der Kettenförderer 56 fördert die Fahrzeugkarosserien 4 jedoch ohne Skid.

Der Trockner 12 mit seinem Kettenförderer 56 ist so angeordnet, dass die Fahrzeugkarosserie 4 durch den Kettenförderer 56 in die gleiche Förderrichtung und auch ohne einen seitlichen Versatz gefördert wird, wie es im Bereich des geradlinigen Abschnitts 16a der Antriebsschiene 16 des Hängeförderers 14 der Fall ist. Diese Förderrichtung ist durch einen Pfeil F veranschaulicht.

Da die Verriegelungsbolzen 50 des Hängeförderers 14 und die Auflagebolzen 64 des Kettenförderers 56 mit denselben Koppelmitteln der Fahrzeugkarosserien 4 zusammenarbeiten, ist es nicht möglich, dass die Fahrzeugkarosserie 4 von dem Hängeförderer 14 unmittelbar an den Kettenförderer 56 übergeben werden kann. Um nun eine zu behandelnde Fahrzeugkarosserie 4 von dem ersten Fördersystem 14 der Tauchbehandlungszone 8 an das zweite Fördersystem 56 der Trockenzone 10 zu übergeben, ist daher im Übergabebereich 6 eine Übergabeeinrichtung 66 vorhanden.

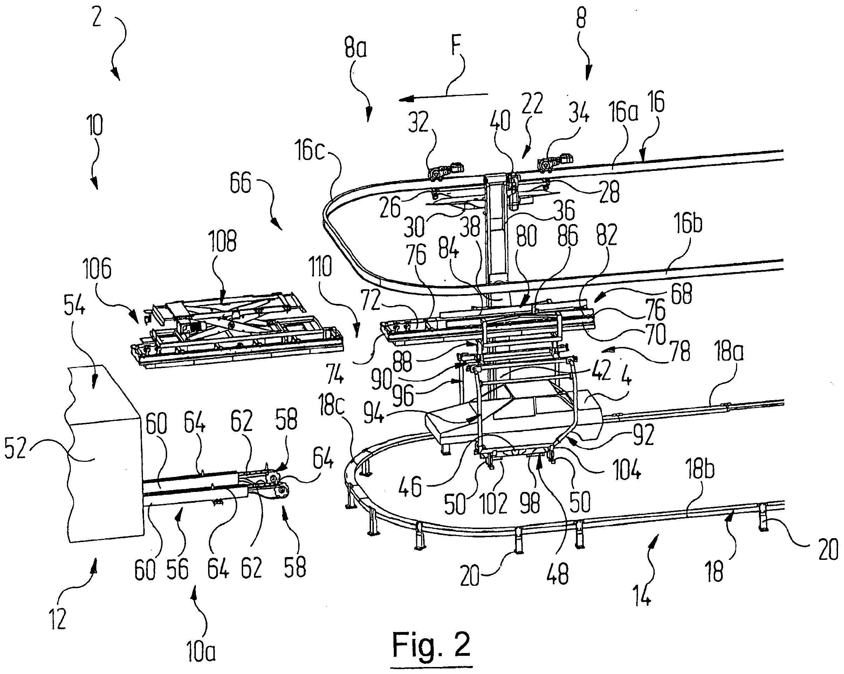

Die Übergabeeinrichtung 66 umfasst beim vorliegenden Ausführungsbeispiel einen ersten Rollenbahnförderer 68 mit zwei horizontal und parallel zueinander verlaufenden lastaufnehmenden Rollenleisten 70, 72, die an ihren jeweiligen Enden über Quertraversen 74 miteinander verbunden sind. Die Rollenleisten 70, 72 verlaufen horizontal. Der erste Rollenbahnförderer 68 ist in einem Abstand vom Boden über eine nicht eigens gezeigte Deckenkonstruktion vertikal zwischen der Antriebsschiene 16 und der Führungsschiene 18 des Hängeförderers 14 im Bereich von dessen geradlinigen Abschnitt 16a der Antriebsschiene 16 angeordnet. Der Rollenbahnförderer 68 ist stationär befestigt und gegenüber dem Abschnitt 16a der Antriebschiene 16 etwas nach innen in Richtung auf den parallelen Abschnitt 16b der Antriebsschiene 16 versetzt angeordnet, so dass das Trag- und Führungsprofil 36 mit dem Schlitten 38 sowie dessen Verbindungsprofil 42 zur Trageinheit 48 seitlich an dem Rollenbahnförderer 68 vorbei geführt werden kann, wobei die Trageinheit 48 unterhalb des Rollenbahnförderers 68 verbleibt, wie es in Figur 2 zu erkennen ist.

Jede Rollenleiste 70, 72 weist mehrere Rollen 76 auf, die nicht alle mit einem Bezugzeichen versehen sind. Die Rollen 76 liegen dabei paarweise gegenüber und sind um jeweils eine horizontale Drehachse verdrehbar gelagert, die senkrecht Längserstreckung der Rollenleisten 70, 72 und damit senkrecht zur Förderrichtung F verlaufen.

Wenigstens eine Rolle 76 eines sich gegenüberliegenden Rollenpaares ist jeweils angetrieben. Dies kann beispielsweise durch einen im Inneren der jeweils angetriebenen Rolle 76 angeordneten elektrischen Nabenmotor erfolgen. Es können auch mehrere oder auch alle Rollen 76 angetrieben sein.

Auf den Rollen 76 läuft ein Fahrwagen 78 mit einem Fahrwerk 80, welches hierzu zwei parallele kufenartige Laufleisten 82, 84 umfasst, die über Querholme 86 miteinander verbunden sind und die auf den Rollen 76 des Rollenbahnförderers 68 aufliegen. Zur Seitenführung der Laufleisten 82, 84 weisen die Rollen 76 der Rollenleisten 70, 72 seitliche Radkränze auf, die hier nicht gesondert bezeichnet sind.

Die Laufleisten 84, 86 sind jeweils seitlich mit einem Traggerüst 88 des Fahrwerks 80 verbunden, welches die Rollenleisten 70, 72 des Rollenbahnförderers 68 seitlich umgreift. Unterhalb der Rollenleisten 70, 72 des Rollenbahnförderers 68 ist dieses Traggerüst 88 mit einem horizontalen Tragrahmen 90 eines Fördergehänges 92 gekoppelt, welcher seinerseits in Förderrichtung F rechts und links jeweils einen Aufnahmerahmen 94 bzw. 96 trägt. Die Aufnahmerahmen 94, 96 sind so weit voneinander beabstandet, dass sie zwischen sich eine Fahrzeugkarosserie 4 aufnehmen können.

An ihrem vom Fahrwerk 80 des Fahrwagens 78 abliegenden unteren Ende weist jeder Aufnahmerahmen 94, 96 einen Tragholm 98 bzw. 100 auf, die sich horizontal und parallel zur Förderrichtung F erstrecken. An jeden Tragholm 98, 100 sind jeweils zwei nach innen ragende Tragwinkel 102 bzw. 104 angeflanscht.

Die Tragwinkel 102 und 104 bieten jeweils eine Auflagefläche 102a bzw. 104b, auf welche eine Fahrzeugkarosserie 4 im Bereich ihrer Boden-Längsholme aufliegen kann. Üblicherweise gibt es bei einer Fahrzeugkarosserie im Bereich von deren Boden-Längsholme einen Blechfalz; dieser kann beispielsweise als Lagerbereich der Fahrzeugkarosserie 4 genutzt werden, an dem die Tragwinkel 102, 104 angreifen können. Insbesondere bietet ein solcher Blechfalz einen oder mehrere tiefste Punkte einer Fahrzeugkarosserie 4, wenn diese in ihrer horizontalen Normallage Dach oben ausgerichtet ist.

Daneben können die Tragwinkel 102, 104 jedoch gegebenenfalls auch mit jedem anderen geeigneten Bereich am Boden der Fahrzeugkarosserie 4 abgesehen von den erwähnten Koppelbauteilen für die Verriegelungsbolzen 50 des Hängeförderers 14 oder Auflagebolzen 64 des Kettenförderers 56 zusammenarbeiten.

Neben dem stationären Rollenbahnförderer 68 umfasst die Übergabeeinrichtung 66 einen in vertikale Richtung verfahrbaren Rollenbahnförderer 106. Dieser ist baugleich zu dem stationären Rollenbahnförderer 68, weshalb entsprechende Komponenten des verfahrbaren Rollenbahnförderers 106 der Übersichtlichkeit halber nicht eigens mit einem Bezugszeichen versehen sind.

Der verfahrbare Rollenbahnförderer 106 bildet mit dem stationären Rollenbahnförderer ein Tragschienensystem für den Fahrwagen 78. Der verfahrbare Rollenbahnförderer 106 ist in Richtung auf den Trockner 12 zu neben dem stationären Rollenbahnförderer 68 angeordnet und erstreckt sich in die gleiche Längsrichtung wie dieser.

Auf seiner Oberseite ist der verfahrbare Rollenbahnförderer 106 ist mit einer Hub-/Senkeinrichtung 108 nach Art eines Scherenhubtischs gekoppelt, welche ihrerseits an einer nicht eigens gezeigten Deckenkonstruktion befestigt ist. Die Hub-/Senkeinrichtung 108 ist nach gängigen Konstruktionsmerkmalen ausgebildet, so dass sich eine nähere Erläuterung hierzu erübrigt.

Der verfahrbare Rollenbahnförderer 106 ist oberhalb des Eingangsbereichs des Kettenförderers 56 angeordnet und kann mittels der Hub-/Senkeinrichtung 108 zwischen einer oberen Arbeitsposition und einer unteren Arbeitsposition bewegt werden. In der in den Figuren 1 bis 4 gezeigten oberen Arbeitsposition ist der verfahrbare Rollenbahnförderer 106 auf dem gleichen Höhenniveau angeordnet, wie der stationäre Rollenbahnförderer 68. In der oberen Arbeitsposition bildet der verfahrbare Rollenbahnförderer 106 somit eine Weiterführung des stationären Rollenbahnförderers 68.

Zwischen den beiden gegenüberliegenden Enden der Rollenbahnförderer 68 und 106 verbleibt dabei ein Zwischenraum 110, der im Bereich unterhalb des geraden Abschnitts 16d des Verbindungsabschnitts 16c der Antriebsschiene 16 des Hängeförderers 14 angeordnet ist. Dieser Zwischenraum 110 ist so dimensioniert, dass der Transportwagen 22 des Hängeförderers 14 vom Abschnitt 16a der Antriebsschiene 16 über den Verbindungsabschnitt 16c zu deren Abschnitt 16b gefahren werden kann, wobei das Trag- und Führungsprofil 36 des Transportwagens 22 kollisionsfrei zwischen den gegenüberliegenden Enden der beiden Rollenbahnförderer 68 und 106 hindurch geführt werden kann.

Die Übergabe einer Fahrzeugkarosserie 4 von dem Hängeförderer 14 der Tauchbehandlungszone 8 an den Kettenförderer 56 der Trockenzone 10 wird nun wie folgt durchgeführt:
In Figur 1 ist als Ausgangssituation gezeigt, dass eine Fahrzeugkarosserie 4 mittels der Verriegelungsbolzen 50 fest an der Trageinheit 48 des Transportwagens 22 des Hängeförderers 14 befestigt ist. Die Fahrzeugkarosserie 4 habe die oben angesprochene Vorbehandlung und kataphoretische Tauchlackierung durchlaufen und soll nun in Förderrichtung F dem Trockner 12 zugeführt und dazu an dessen Kettenförderer 56 übergeben werden.

Der Fahrwagen 78 der Übergabeeinrichtung 66 befindet sich im Bereich des stationären Rollenbahnförderers 68 und ruht mit seinen Laufleisten 82, 84 auf dessen Rollen 76.

Der Schlitten 38 des Transportwagens 22 wird mittels des Stellmotors 40 in eine vertikale Position verfahren, in welcher die Trageinheit 48 mit der Fahrzeugkarosserie 4 auf einem Höhenniveau oberhalb der Aufnahmeflächen 102a, 104a der Tragwinkel 102, 104 des Fördergehänges 92 der Übergabeeinrichtung 66 angeordnet ist.

Nun wird der Transportwagen 22 in Förderrichtung F bewegt, bis sich die Fahrzeugkarosserie 4 zwischen den Aufnahmerahmen 94, 96 des Fahrwagens 78 der Übergabeeinrichtung 66 befindet. Dabei wird die Fahrzeugkarosserie 4 in Förderrichtung F so positioniert, dass die Tragwinkel 102 und 104 unterhalb der ihnen jeweils zugeordneten Bodenbereiche der Fahrzeugkarosserie 4 zu liegen kommen, die oben erläutert wurden.

Dann wird der Schlitten 38 des Transportwagens 22 nach unten verfahren, bis die Fahrzeugkarosserie 4 mit ihren oben erläuterten hierzu geeigneten Bodenbereichen auf den Auflageflächen 102a, 104a der Tragwinkel 102, 104 des Fördergehänges 92 aufsitzt. Diese Phase ist in Figur 2 gezeigt. Dort ist zu sehen, dass zumindest die in Förderrichtung F hinteren Tragwinkel 104 dann in Richtung senkrecht zur Förderrichtung F seitlich neben den in Förderrichtung F hinteren Verriegelungsbolzen 50 positioniert sind. Die Bodenbereiche der Fahrzeugkarosserie 4, die mit den Tragwinkeln 104 zusammenarbeiten, flankieren dementsprechend die Koppelbauteile der Fahrzeugkarosserie 4, die für die Verriegelungsbolzen 50 des Hängeförderers 14 bzw. die Auflagebolzen 64 des Kettenförderers 56 gedacht sind.

Die Tragwinkel 102, 104 jedenfalls greifen an Bodenbereichen der Dach oben ausgerichteten Fahrzeugkarosserie 4 an und arbeiten mit diesen zusammen, die nicht von dem ersten Fördersystem in Form des Hängeförderers 14 oder dem zweiten Fördersystem in Form des Kettenförderers 56 genutzt werden. Im vorliegenden Fall sind diese Bodenbereiche am Schweller der Fahrzeugkarosserie 4 vorhanden.

Die Koppelbauteile der Fahrzeugkarosserie 4 für die Verriegelungsbolzen 50 des Hängeförderers 14 bzw. die Auflagebolzen 64 des Kettenförderers 56 sind entsprechend gegenüber den Schwellern der Fahrzeugkarosserie 4 bezogen auf deren Mittelebene in Längsrichtung nach innen versetzt angeordnet, wie dies üblicherweise der Fall ist.

Die Verriegelungsbolzen 50 der Trageinheit 48 werden nun gelöst und der Schlitten 38 des Transportwagens 22 wird ein wenig nach unten gefahren, so dass die Trageinheit 48 die Fahrzeugkarosserie 4 freigibt und diese nun vollständig von dem Fahrwagen 78 der Übergabeeinrichtung 66 getragen ist.

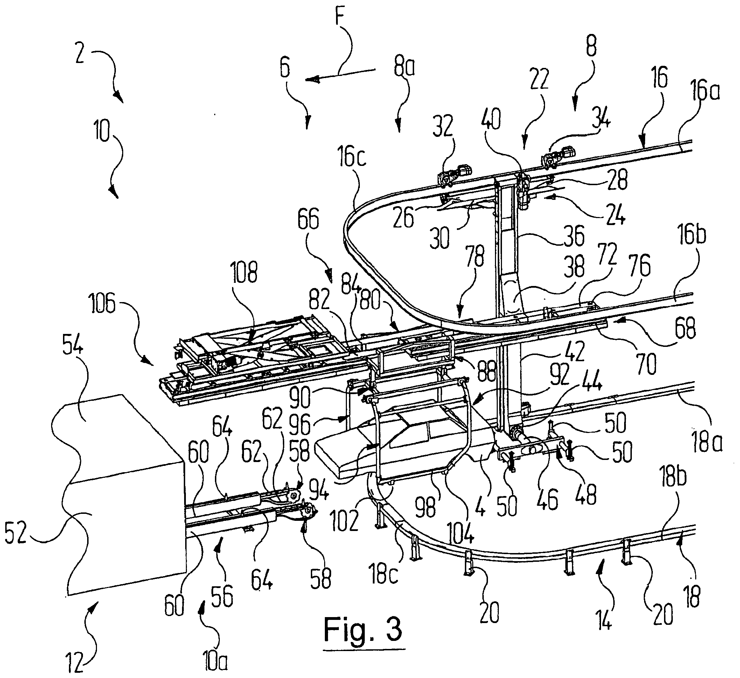

Der verfahrbare Rollenbahnförderer 106 wird mittels der Hub-Senkeinrichtung 108 in seine obere Arbeitsstellung gebracht und die angetriebenen Rollen 76 der beiden Rollenbahnförderer 68, 106 werden bestromt, so dass der Fahrwagen 78 mitsamt der Fahrzeugkarosserie 4 in Förderrichtung F von dem stationären Rollenbahnförderer 68 auf den verfahrbaren Rollenbahnförderer 106 bewegt wird. In Figur 3 ist der Fahrwagen 78 beim Fahren vom stationären Rollenbahnförderer 68 auf den verfahrbaren Rollenbahnförderer 106 gezeigt. Wie dort zu erkennen ist, sind die Laufleisten 80, 82 des Fahrwagens 78 der Übergabeeinrichtung 66 so lang, dass der Zwischenraum 110 zwischen den gegenüberliegenden Enden der beiden Rollenbahnförderer 68 und 106 gefahrlos überbrückt werden kann.

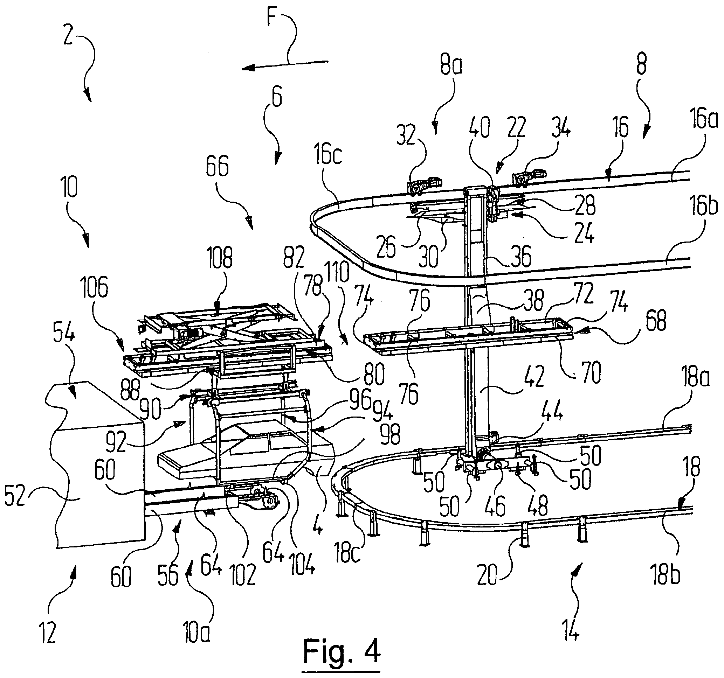

Nachdem der Fahrwagen 78 vollständig auf den verfahrbaren Rollenbahnförderer 106 aufgefahren ist (siehe Figur 4), wird der Fahrwagen 78 in eine Position gebracht, in welcher die oben erläuterten Koppelbauteile der Fahrzeugkarosserie 4 jeweils oberhalb eines zugehörigen nach oben ragenden Auflagebolzens 64 des Kettenförderers 56 angeordnet sind.

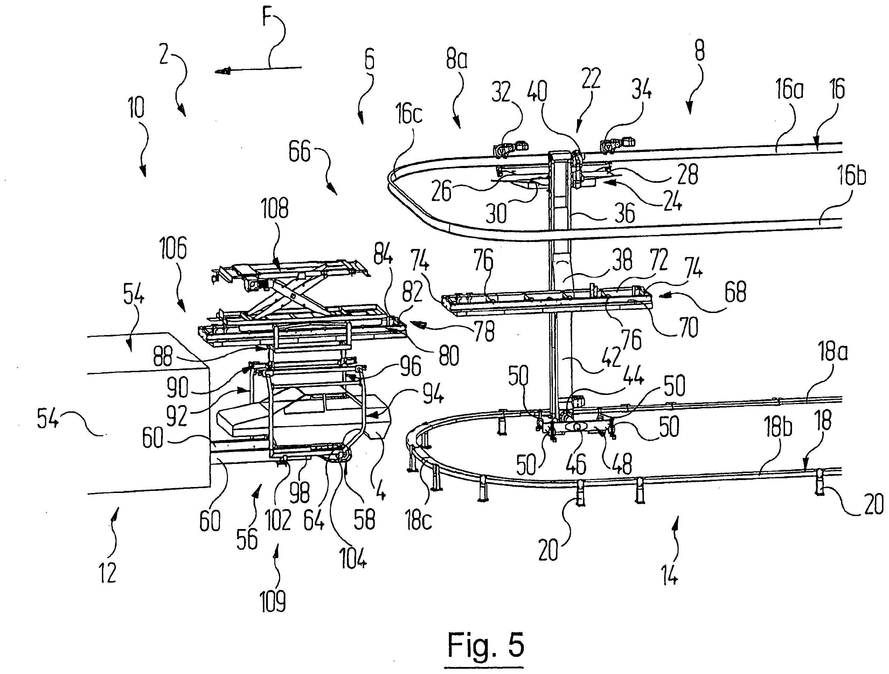

Dann wird die Hub-/Senkeinrichtung 108 derart angesteuert, dass der verfahrbare Rollenbahnförderer 106 zusammen mit dem Fahrwagen 78 und der Fahrzeugkarosserie 4 abgesenkt wird. Bei der Abwärtsbewegung greifen die Auflagebolzen 64 in das jeweils zugehörige Koppelbauteil der Fahrzeugkarosserie 4 ein und nehmen die Fahrzeugkarosserie 4 auf. Der verfahrbare Rollenbahnförderer 106 wird über diese Aufnahmestellung hinaus weiter nach unten in eine untere Arbeitsstellung bewegt, so dass sich die Tragwinkel 102, 104 des Fördergehänges 92 von der Fahrzeugkarosserie 4 lösen und diese schließlich vollständig auf dem Kettenförderer 56 ruht. Dies ist in Figur 5 gezeigt.

Die Übergabe der Fahrzeugkarosserie 4 kann zum Einen bei stehendem Kettenförderer 56 erfolgen. Zum Anderen kann die Übergabe jedoch auch bei laufendem Kettenförderer 56 durchgeführt werden, wozu des Fahrwagen 78 synchron mit der Vortriebsgeschwindigkeit des Kettenförderers 56 bewegt und die Fahrzeugkarosserie 4 zugleich abgesenkt wird. Hiernach wird die Fahrzeugkarosserie 4 mittels des Kettenförderers 56 in das Trocknergehäuse 52 hinein gefördert, wo die Fahrzeugkarosserie 4 getrocknet wird. Nachdem die Fahrzeugkarosserie 4 so von dem Fördergehänge 92 weg bewegt worden ist, kann der verfahrbare Rollenbahnförderer 106 wieder in seine obere Arbeitsstellung gebracht und der Fahrwagen 78 wieder auf den stationären Rollenbahnförderer 68 zurück bewegt werden (siehe Figur 1). Der Übergabevorgang kann dann mit einer weiteren Fahrzeugkarosserie 4, die von der kataphoretischen Tauchlackierung in der Tauchbehandlungszone 8 kommt, erneut durchgeführt werden.

Während sich der Fahrwagen 78 auf dem verfahrbaren Rollenbahnförderer 106 befindet, kann der Transportwagen 22 des Hängeförderers 14 zwischen den Rollenbahnförderern 68, 106 hindurch zum Abschnitt 16b der Antriebsschiene 16 bewegt werden und über diesen zu den Tauchbecken der Tauchbehandlungszone 8 zurück geführt werden.

Durch den verfahrbaren Rollenbahnförderer 106 kann die vertikale Position des Fördergehänges 92 und damit der Tragwinkel 102, 104 eingestellt werden. In einer Abwandlung kann eine Hub-/Senkeinrichtung auch zwischen dem Fahrwagen 78 und dem Fördergehänge 92 angeordnet sein. In diesem Fall kann der zweite Rollenbahnförderer 106 ebenfalls stationär und in seiner Höhe unveränderlich sein.

Die Übergabeeinrichtung 66 gemäß dem ersten Ausführungsbeispiel nach den Figuren 1 bis 5 ist besonders für eine Übergabe zwischen zwei Fördersystemen eingerichtet, bei denen die Fahrzeugkarosserie 4 in ein und dieselbe Förderrichtung F gefördert werden, ohne dass es zu einer Richtungsänderung oder einem seitlichen Versatz zwischen den Förderrichtungen der beiden Fördersysteme kommt.

Die einzelnen örtlichen Gegebenheiten können jedoch auch eine Anordnung der beiden hintereinander zu durchlaufenden Behandlungszonen 8 und 10 verlangen, die eine Änderung der Förderrichtung F der Fahrzeugkarosserie 4 erfordern.

Ein zweites Ausführungsbeispiel einer Oberflächenbehandlungsanlage 2, bei dem dies der Fall ist, wird nun anhand der Figuren 6 bis 21 erläutert. Dort sind Komponenten, die denjenigen des ersten Ausführungsbeispiels nach den Figuren 1 bis 5 entsprechen, mit denselben Bezugszeichen versehen, wobei nur die wesentlichen Komponenten gekennzeichnet sind.

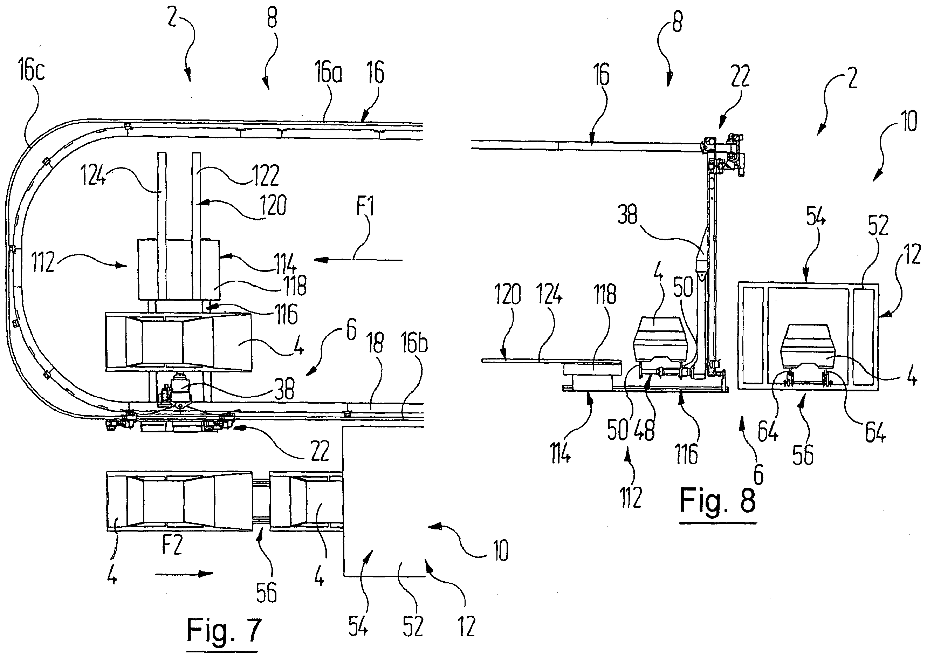

Die Tauchbehandlungszone 8 und die Trockenzone 10 sind hier nicht in ein und derselben Förderrichtung hintereinander angeordnet. Vielmehr befinden sich die Tauchbehandlungszone 8 und die Trockenzone 10 derart nebeneinander, dass die Fahrzeugkarosserien 4 mit dem Hängeförderer 14 in einer ersten Förderrichtung F1 durch die Tauchbehandlungszone 8 und mit dem Kettenförderer 56 in einer dazu entgegengesetzten zweiten Förderrichtung F2 durch den Trockner 12 gefördert werden. Die Förderrichtungen F1 und F2 sind nur in den Figuren 6 und 7 durch Pfeile angedeutet. Das Trocknergehäuse 52 verlauft dabei neben dem Abschnitt 18a der Führungsschiene 18 des Hängeförderers 14.

Um hier eine Übergabe zwischen dem Hängeförderer 14 als erstes Fördersystem und dem Kettenförderer 56 als zweites Fördersystem zu ermöglichen, ist eine Übergabeeinrichtung 112 vorhanden, welche eine Bewegung einer Fahrzeugkarosserie 4 senkrecht zu den Förderrichtungen F1 und F2 gestattet.

Hierzu umfasst die Übergabeeinrichtung 112 als Fahrwagen einen Schlittenwagen 114, der auf einem hier als Tragschienensystem dienenden Schienenpaar 116 läuft, das am Boden angebracht ist. Das Schienenpaar 116 ist zwischen den Abschnitten 18a und 18b der Führungsschiene 18 angeordnet und verläuft senkrecht zu diesen. Dabei erstreckt sich das Schienenpaar 116 bis unter die Führungsschiene 18, so dass der Schlittenwagen 114 grundsätzlich so nahe an die Führungsschiene 18 heran bewegt werden könnte, bis er diese berührt. Im Betrieb wird der Schlittenwagen 114 zwischen einer vorderen Betriebsposition, in der er dicht an die Führungsschiene 18 herangefahren ist, und einer hinteren Betriebsposition, in der er von der Führungsschiene 18 beabstandet ist, hin und her gefahren. Wenn der Schlittenwagen 114 seine hintere Betriebsposition einnimmt, ist der Abstand zur Führungsschiene 18 so groß, dass die Trageinheit 48 des Transportwagens 22 des Hängeförderers 14 zwischen dem Schlittenwagen 114 und der Führungsschiene 18 Platz findet. Dies ist beispielsweise in Figur 6 zu erkennen.

Der Schlittenwagen 114 umfasst einen in vertikaler Richtung heb- und senkbaren Tragtisch 118, der zwischen einer unteren Arbeitsstellung und einer oberen Arbeitsstellung auf und ab gefahren werden kann. Hierzu führt der Schlittenwagen 114 eine in den Figuren nicht eigens gezeigte Hub- und Senkeinrichtung mit sich, die beispielsweise in Form eines Exzenterhubtisches oder eines Scherenhubtisches vorliegen kann, wie es an und für sich bekannt ist.

Der Tragtisch 118 seinerseits führt eine horizontal verlaufende Traggabel 120 mit zwei parallelen Tragzinken 122, 124, die jeweils eine oben liegende Auflagefläche 122a, 124a bieten.

Durch den Tragtisch 118 kann die vertikale Position der Traggabel 120 und damit der Tragzinken 122, 124 eingestellt werden. Darüber hinaus kann die Traggabel 120 horizontal in einer Richtung auf die Trockenzone 10 zu über den Tragtisch 118 hinaus ausgefahren und wieder eingefahren werden, die senkrecht zu den Förderrichtungen F1 und F2 steht. Hierdurch ist die horizontale Position der Traggabel 120 gegenüber dem Schlittenwagen 114 einstellbar.

Die Übergabe einer Fahrzeugkarosserie 4 von dem Hängeförderer 14 der Tauchbehandlungszone 8 an den Kettenförderer 56 der Trockenzone 10 wird mittels der Übergabeeinrichtung 112 wie folgt durchgeführt. Die Figuren 6, 9, 12, 15, 16 bzw. 19 zeigen fünf Phasen der Übergabe in einer perspektivischen Ansicht, von denen die erste, zweite und dritte sowie fünfte und sechste Phase in den Figuren 7, 10, 13, 17 bzw. 20 in einer Draufsicht und in den Figuren 8, 11, 14, 18 und 21 in einer Frontansicht gezeigt sind.

In den Figuren 6, 7 und 8 ist als Ausgangssituation gezeigt, dass der Schlittenwagen 114 seine hintere Betriebsposition einnimmt. Zudem wurde der Tragtisch in seine untere Arbeitsstellung gebracht und die Traggabel 120 eingefahren, so dass der Raum zwischen dem Schlittenwagen 114 und der Führungsschiene 18 frei ist. Der Kettenförderer 56 trägt bereits zu trocknende Fahrzeugkarosserien 4.

Eine über den Schienenabschnitt 16a von den Tauchbecken der Tauchbehandlungszone 8 kommende Fahrzeugkarosserie 4 ist in der in den Figuren 6 bis 8 gezeigten Phase noch mittels der Verriegelungsbolzen 50 fest an der Trageinheit 48 des Transportwagens 22 des Hängeförderers 14 befestigt. Der Transportwagen 22 des Hängeförderers 14 wurde bereits in eine Position gefahren, in der die Fahrzeugkarosserie 4 vor dem Schlittenwagen 114 angeordnet ist. Hierzu hat der Transportwagen von dem Abschnitt 16a kommend bereits den Kurvenabschnitt 16c der Antriebsschiene 16 durchfahren.

Auf Grund der Erstreckung der Verriegelungsbolzen 50 verbleibt zwischen der Trageinheit 48 des Transportwagens 22 und dem Boden der Fahrzeugkarosserie 4 ein Abstand. Der Schlitten 38 des Transportwagens 22 und der Tragtisch 118 der Übergabeeinrichtung 112 werden auf ein jeweiliges Höhenniveau gebracht, so dass die Tragzinken 122, 124 der Traggabel 120 in den Raum zwischen der Trageinheit 48 und der Fahrzeugkarosserie 4 eingefahren werden können. Dar Abstand der Tragzinken 122, 124 der Traggabel 120 ist derart, dass diese zwischen den Verriegelungsbolzen 50 einfahren kann und die Auflageflächen 122a, 124a unterhalb der oben erläuterten Auflage-Bodenbereiche der Fahrzeugkarosserie 4 zu liegen kommen.

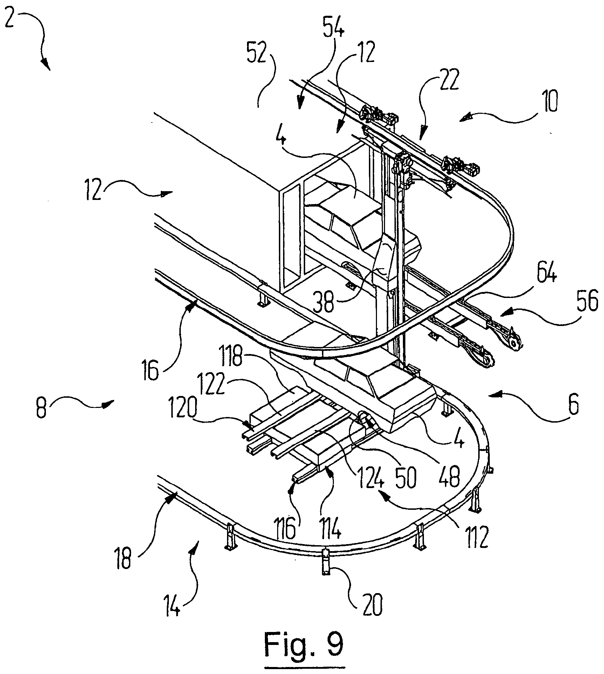

Dies wird dann in einem nächsten Schritt durchgeführt, wobei gegebenenfalls auch der Schlittenwagen 114 der Übergabeeinrichtung 112 etwas auf die Fahrzeugkarosserie 4 zu bewegt wird. Dann wird der Tragtisch 118 der Übergabeeinrichtung 112 etwas angehoben, bis die Auflageflächen 122a, 124a der Traggabel 120 die Auflage-Bodenbereiche der Fahrzeugkarosserie 4 berühren. Diese Phase ist in den Figuren 9 bis 11 gezeigt. Wie dort zu erkennen ist, wurden die Fahrzeugkarosserien 4 auf dem Kettenförderer 56 währenddessen in Förderrichtung F2 bewegt, so dass der Anfangsbereich des Kettenförderers 56 nun unbesetzt und frei für eine weitere Fahrzeugkarosserie 4 ist.

Die Verriegelungsbolzen 50 der Trageinheit 48 werden gelöst und der Schlitten 38 des Transportwagens 22 wird ein wenig nach unten gefahren, so dass die Trageinheit 48 die Fahrzeugkarosserie 4 freigibt und diese nun vollständig von dem Schlittenwagen 114 der Übergabeeinrichtung 112 getragen ist.

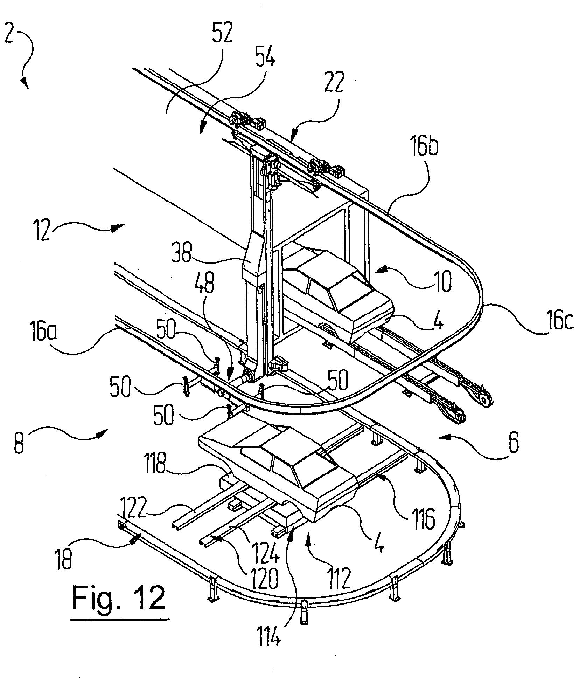

Zunächst wird nun die Traggabel 120 der Übergabeeinrichtung 112 eingefahren, so dass die Fahrzeugkarosserie 4 über dem Tragtisch 118 zu liegen kommt. Dann kann der Transportwagen 22 des Hängeförderers 14 z.B. entgegen der Förderrichtung F1 bewegt werden, so dass der Bereich vor dem Schlittenwagen 114 in Richtung auf die Trockenzone 10 frei wird. Diese Phase der Übergabe ist in den Figuren 12 bis 14 gezeigt. Von hier aus kann der Transportwagen 22 über den Schienenabschnitt 16b zu den Tauchbecken der Tauchbehandlungszone 8 zurückgeführt werden.

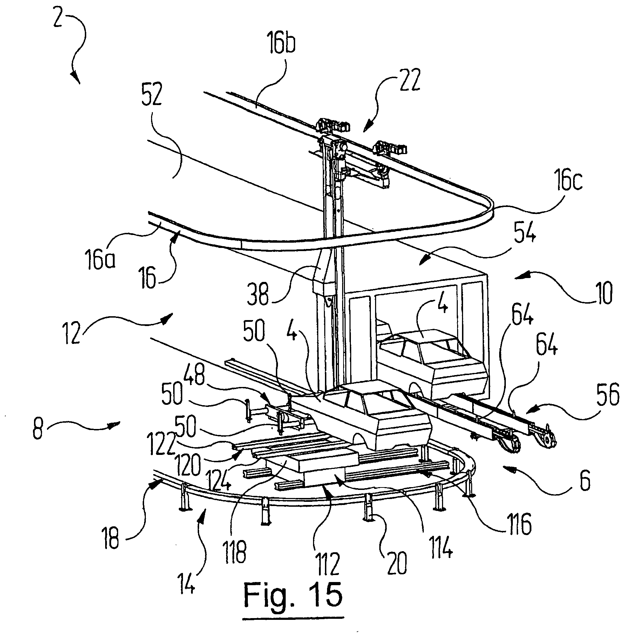

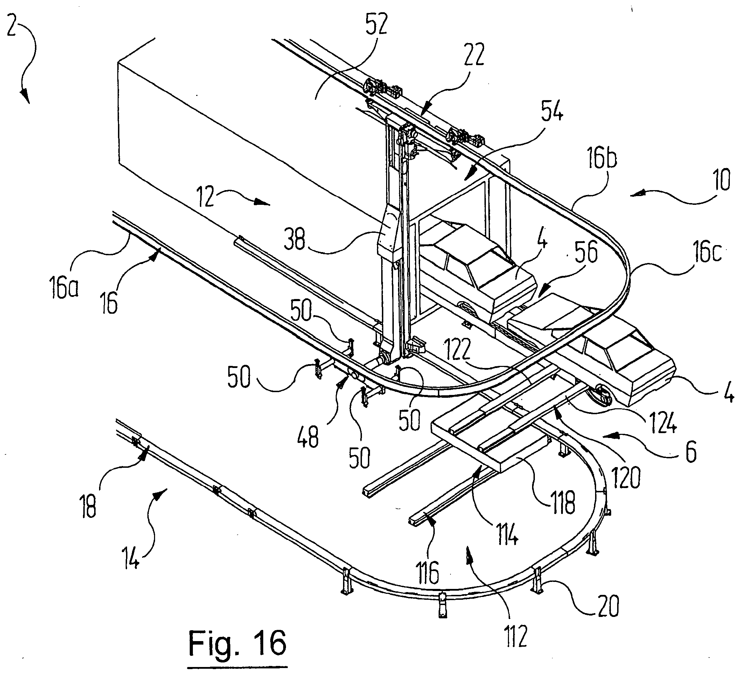

Nun wird in einer abgestimmten Bewegung einerseits die Traggabel 120 über den Tragtisch 118 vollständig ausgefahren und andererseits der Schlittenwagen 114 in seine vordere Betriebsposition gefahren. So nimmt der Schlittenwagen 114 eine Übergabestellung ein, welche in den Figuren 16 bis 18 gezeigt ist, wobei eine in Figur 15 veranschaulichte Zwischenstellung durchlaufen wird.

In der Übergabestellung des Schlittenwagens 114 nimmt die Fahrzeugkarosserie 4 eine Position über dem Kettenförderer 56 ein, in welcher deren oben erläuterten Koppelbauteile jeweils oberhalb eines zugehörigen nach oben ragenden Auflagebolzen 64 des Kettenförderers 56 angeordnet sind. Gegebenenfalls wurde hierzu der Tragtisch 118 des Schlittenwagens 114 gegenüber seiner Ausgangsstellung noch etwas angehoben.

Dann wird der Tragtisch 118 zusammen mit der Fahrzeugkarosserie 4 abgesenkt, wobei die Auflagebolzen 64 des Kettenförderers 56 in das jeweils zugehörige Koppelbauteil der Fahrzeugkarosserie 4 ein und nehmen die Fahrzeugkarosserie 4 auf. Die Auflagebolzen 64 sind so lang, dass die Tragzinken 122, 124 sich in dem Zwischenraum zwischen der Fahrzeugkarosserie 4 und den Endlosketten 58 des Kettenförderers weiter nach unten bewegen können, um die Fahrzeugkarosserie 4 freizugeben.

Nachdem dies geschehen ist, wird die Traggabel 120 eingefahren und die Fahrzeugkarosserie 4 ist an den Kettenförderer 56 übergeben. Sodann wird die Fahrzeugkarosserie 4 mittels des Kettenförderers 56 in das Trocknergehäuse 52 hinein gefördert, wo die Fahrzeugkarosserie 4 getrocknet wird.

Die verfahrbaren und bewegbaren Komponenten der Übergabeeinrichtung 112 werden wieder in ihre in den Figuren 6 bis 8 gezeigten Ausgangsstellungen gebracht, worauf der Übergabevorgang mit einer anderen Fahrzeugkarosserie 4, die von der kataphoretischen Tauchlackierung in der Tauchbehandlungszone 8 kommt, erneut durchgeführt werden kann.

Die oben erläuterten Übergabeeinrichtungen 66 und 112 als erstes und zweites Ausführungsbeispiel wurden anhand eines jeweiligen Übergabebereichs zwischen einer Tauchbehandlungszone und einer Trockenzone beschrieben, was den eingangs erläuterten Behandlungszonen BZ-1 und BZ-2 entspricht. Die Übergabeeinrichtungen 66 und 112 können jedoch auch in jedem anderen Übergabegabebereich zwischen aufeinanderfolgenden Behandlungszonen BZ-(x) und BZ-(x+1) angeordnet sein, in dem eine Fahrzeugkarosserie von einem ersten Fördersystem an ein zweites Fördersystem übergeben werden muss.

Auch können die Fahrzeugkarosserien 4 nicht nur von einem Hängeförderer an ein zweites Fördersystem übergeben werden. Es ist eine entsprechende Übergabe auch von baulich anderen und auch voneinander verschiedenen ersten Fördersystemen an ein zweites Fördersystem möglich.

Gemäß dem eingangs erläuterten Hauptgedanken der Erfindung soll eine Fahrzeugkarosserie möglichst beim gesamten Durchlauf durch die Behandlungsanlage 2 ohne Skid gefördert werden. Diesem Hauptgedanken folgend sind die beiden Fördersysteme 14 und 56 bei der oben beschriebenen Behandlungsanlage 2 beispielhaft jeweils als Variante erläutert worden, bei der die Fahrzeugkarosserie 4 nicht auf einem Skid gefördert wird, wie es allgemein üblich ist, sondern jeweils unmittelbar mit dem entsprechenden Fördersystem 14 oder 56 gekoppelt ist.

In Abwandlung hiervon können die Übergabeeinrichtungen 66 und 112 auch eingesetzt werden, um Fahrzeugkarosserien von einem ersten Fördersystem, bei dem die Fahrzeugkarosserien mit einem Skid gefördert werden, an ein zweites Fördersystem zu übergeben, von dem die Fahrzeugkarosserien ohne Skid transportiert werden. Entsprechend kann die Übergabe einer Fahrzeugkarosserie mit den Übergabeeinrichtungen 66 oder 112 auch von einem ersten Fördersystem, von dem die Fahrzeugkarosserien ohne Skid transportiert werden, an ein zweites Fördersystem erfolgen, bei dem die Fahrzeugkarosserien mit einem Skid gefördert werden. Auf diese Weise kann wenigstens in Teilbereichen der Behandlungsanlage auf Skids verzichtet werden, insbesondere z.B. in Trockenzonen, so dass keine zusätzliche Energie an die Skids abgegeben wird.

## Patentansprüche

1. Anlage zur Oberflächenbehandlung von Fahrzeugkarosserien mit
a) einer Tauchbehandlungszone (8), welche ein erstes Fördersystem (14) umfasst, mittels welchem eine Fahrzeugkarosserie (4) durch die Tauchbehandlungszone (8) förderbar ist;
b) eine Trockenzone (10), welche ein zweites Fördersystem (56) umfasst, welches von dem ersten Fördersystem (14) baulich verschieden ist und mittels welchem die Fahrzeugkarosserie (4) durch einen Trockner (12) der Trockenzone (10) förderbar ist,
wobei
c) eine Übergabeeinrichtung (66; 112) vorhanden ist, mittels welcher die Fahrzeugkarosserie (4) von dem ersten Fördersystem (14) an das zweite Fördersystem (56) übergeben werden kann;
d) die Übergabeeinrichtung (66; 112) Tragmittel (102, 104; 122, 124) umfasst, welche an Bereichen der Fahrzeugkarosserie (4) angreifen, von denen insbesondere wenigstens einer am tiefsten Punkt der horizontal und Dach oben ausgerichteten Fahrzeugkarosserie (4) angeordnet ist,
**dadurch gekennzeichnet, dass**
e) das erste Fördersystem (14) und/oder das zweite Fördersystem (56) derart eingerichtet sind, dass sie die Fahrzeugkarosserie (4) ohne eine separate Tragstruktur für die Fahrzeugkarosserie (4) fördern.

2. Anlage nach Anspruch 1, **dadurch gekennzeichnet, dass** das erste Fördersystem (14) und/oder das zweite Fördersystem (56) Koppelelemente (50, 64) umfassen, die mit Koppelbauteilen der Fahrzeugkarosserie (4) zusammenarbeiten.

3. Anlage nach einem der Ansprüche 1 oder 2, **dadurch gekennzeichnet, dass** die Tragmittel (102, 104; 122, 124) der Übergabeeinrichtung (66; 112) derart eingerichtet sind, dass sie mit Bodenbereichen der Dach oben ausgerichteten Fahrzeugkarosserie (4) zusammenarbeiten, die nicht von dem ersten Fördersystem (14) oder dem zweiten Fördersystem (56) genutzt werden.

4. Anlage nach einem der Ansprüche 1 bis 3, **dadurch gekennzeichnet, dass** die Übergabeeinrichtung (66; 112) ein Tragschienensystem (68, 106; 116) und einen darauf ablaufenden Fahrwagen (78; 114) umfasst, der die Tragmittel (102, 104; 122, 124) für die Fahrzeugkarosserie (4) mit sich führt.

5. Anlage nach Anspruch 4, **dadurch gekennzeichnet, dass** die vertikale Position der Tragmittel (102, 104; 122, 124) einstellbar ist.

6. Anlage nach Anspruch 4 oder 5, **dadurch gekennzeichnet, dass** das Tragschienensystem (68, 106) der Übergabeeinrichtung (66) als Rollenbahnförderer (68, 106) ausgebildet ist und der Fahrwagen (78) ein dazu komplementäres Fahrwerk (80) umfasst.

7. Anlage nach Anspruch 6, **dadurch gekennzeichnet, dass** der Rollenbahnförderer (68, 106) in einem Abstand zum Boden angeordnet ist und das Fahrwerk (80) mit einem Fördergehänge (92) gekoppelt ist, welches seinerseits die Tragmittel (102, 104) für die Fahrzeugkarosserie (4) umfasst.

8. Anlage nach Anspruch 7, **dadurch gekennzeichnet, dass** zumindest ein Abschnitt (106) des Rollenbahnförderers (68, 106) mittels einer Hub-/Senkeinrichtung (108) zwischen einer oberen und einer unteren Arbeitsposition verfahrbar ist.

9. Anlage nach Anspruch 4 oder 5, **dadurch gekennzeichnet, dass** das Tragschienensystem (116) der Übergabeeinrichtung (112) ein Bodenschienensystem und der Fahrwagen (114) ein darauf ablaufender Schlittenwagen (114) ist.

10. Anlage nach Anspruch 9, **dadurch gekennzeichnet, dass** der Schlittenwagen (114) eine Hub-/Senkeinrichtung mit sich führt, durch welche vertikale Position der Tragmittel (122, 124) einstellbar ist.

11. Anlage nach Anspruch 9 oder 10, **dadurch gekennzeichnet, dass** die horizontale Position der Tragmittel (122, 124) gegenüber dem Schlittenwagen (114) einstellbar ist.

12. Anlage nach einem der Ansprüche 9 bis 11, **dadurch gekennzeichnet, dass** die Tragmittel (122, 124) als Gabelelement (120) mit wenigstens zwei Tragzinken (122, 124) ausgebildet ist.

13. Verfahren zum Fördern von Fahrzeugkarosserien durch eine Anlage zur Oberflächenbehandlung, bei welchem eine Fahrzeugkarosserie (4) mittels eines ersten Fördersystems (14) durch eine Tauchbehandlungszone (8) und mittels eines zweiten Fördersystems (56), welches von dem ersten Fördersystem (14) baulich verschieden ist, durch einen Trockner (12) einer Trockenzone (10) gefördert wird,
wobei
die Fahrzeugkarosserie (4) mit einer Übergabeeineinrichtung (66; 112) von dem ersten Fördersystem (14) an das zweite Fördersystem (56) übergeben wird;
wobei mit Tragmitteln (102, 104; 122, 124) der Übergabeeinrichtung (66; 112) an Bereichen der Fahrzeugkarosserie (4) angegriffen wird, von denen insbesondere wenigstens einer am tiefsten Punkt der horizontal und Dach oben ausgerichteten Fahrzeugkarosserie (4) angeordnet ist,
**dadurch gekennzeichnet, dass**
die Fahrzeugkarosserie (4) mittels des ersten Fördersystems (14) und/oder mittels des zweiten Fördersystems (56) ohne eine separate Tragstruktur für die Fahrzeugkarosserie (4) gefördert wird.

14. Verfahren nach Anspruch 14, **dadurch gekennzeichnet, dass** mittels der Tragmittel (102, 104; 122, 124) der Übergabeeinrichtung (66, 112) an Bodenbereichen der Dach oben ausgerichteten Fahrzeugkarosserie (4) angegriffen wird, die nicht von dem ersten Fördersystem (14) oder dem zweiten Fördersystem (56) genutzt werden.

## Claims

1. Surface treatment plant for motor vehicle bodies, having
a) a dip treatment zone (8) which comprises a first conveying system (14) by means of which a motor vehicle body (4) can be conveyed through the dip treatment zone (8);
b) a drying zone (10) which comprises a second conveying system (56) which is structurally different from the first conveying system (14) and by means of which the motor vehicle body (4) can be conveyed through a drier (12) of the drying zone (10), wherein
c) there is present a transfer device (66; 112) by means of which the motor vehicle body (4) can be transferred from the first conveying system (14) to the second conveying system (56);
d) the transfer device (66; 112) comprises carrier means (102, 104; 122, 124) which engage on regions of the motor vehicle body (4) of which in particular at least one is arranged at the lowest location of the motor vehicle body (4) which is orientated in a horizontal and upright manner, **characterised in that**
e) the first conveying system (14) and/or the second conveying system (56) is/are configured in such a manner that they convey the motor vehicle body (4) without a separate carrier structure for the motor vehicle body (4).

2. Plant according to claim 1, **characterised in that** the first conveying system (14) and/or the second conveying system (56) comprise(s) coupling elements (50, 64) which cooperate with coupling components of the motor vehicle body (4).

3. Plant according to either claim 1 or claim 2, **characterised in that** the carrier means (102, 104; 122, 124) of the transfer device (66; 112) are configured in such a manner that they cooperate with floor regions of the motor vehicle body (4) which is orientated in an upright manner, which regions are not used by the first conveying system (14) or the second conveying system (56).

4. Plant according to any one of claims 1 to 3, **characterised in that** the transfer device (66; 112) comprises a carrier rail system (68, 106; 116) and a carriage (78; 114) which travels thereon and which guides with it the carrier means (102, 104; 122, 124) for the motor vehicle body (4).

5. Plant according to claim 4, **characterised in that** the vertical position of the carrier means (102, 104; 122, 124) can be adjusted.

6. Plant according to claim 4 or claim 5, **characterised in that** the carrier rail system (68, 106) of the transfer device (66) is constructed as a roller conveyor (68, 106) and the carriage (78) comprises a complementary chassis (80).

7. Plant according to claim 6, **characterised in that** the roller conveyor (68, 106) is arranged with spacing with respect to the floor and the chassis (80) is coupled to an overhead conveyor (92) which itself comprises the carrier means (102, 104) for the motor vehicle body (4).

8. Plant according to claim 7, **characterised in that** at least a portion (106) of the roller conveyor (68, 106) can be moved by means of a lifting/lowering device (108) between an upper and a lower operating position.

9. Plant according to claim 4 or claim 5, **characterised in that** the carrier rail system (116) of the transfer device (112) is a floor rail system and the carriage (114) is a sliding carriage (114) which travels thereon.

10. Plant according to claim 9, **characterised in that** the sliding carriage (114) guides with it a lifting/lowering device by means of which the vertical position of the carrier means (122, 124) can be adjusted.

11. Plant according to claim 9 or claim 10, **characterised in that** the horizontal position of the carrier means (122, 124) can be adjusted with respect to the sliding carriage (114).

12. Plant according to any one of claims 9 to 11, **characterised in that** the carrier means (122, 124) is constructed as a fork element (120) with at least two carrier prongs (122, 124).

13. Method for conveying motor vehicle bodies through a surface treatment plant, in which a motor vehicle body (4) is conveyed by means of a first conveying system (14) through a dip treatment zone (8) and by means of a second conveying system (56) which is structurally different from the first conveying system (14) through a drier (12) of a drying zone (10), wherein the motor vehicle body (4) is transferred with a transfer device (66; 112) from the first conveying system (14) to the second conveying system (56);
wherein carrier means (102, 104; 122, 124) of the transfer device (66; 112) engage with regions of the motor vehicle body (4), of which in particular at least one is arranged at the lowest location of the motor vehicle body (4) which is orientated in a horizontal and upright manner, **characterised in that**
the motor vehicle body (4) is conveyed by means of the first conveying system (14) and/or by means of the second conveying system (56) without a separate carrier structure for the motor vehicle body (4).

14. Method according to claim 14, **characterised in that** the carrier means (102, 104; 122, 124) of the transfer device (66, 112) engage with floor regions of the motor vehicle body (4) orientated in an upright manner, which regions are not used by the first conveying system (14) or the second conveying system (56).

## Revendications

1. Installation dévolue au traitement de surfaces de carrosseries de véhicules, comprenant
a) une zone de traitement en immersion (8), incluant un premier système de convoyage (14) au moyen duquel une carrosserie (4) de véhicule peut être convoyée à travers ladite zone de traitement en immersion (8) ;
b) une zone de séchage (10) incluant un second système de convoyage (56) qui diffère dudit premier système de convoyage (14), et au moyen duquel ladite carrosserie (4) de véhicule peut être convoyée à travers un séchoir (12) de ladite zone de séchage (10) ;
sachant
c) qu'il est prévu un dispositif de transfert (66 ; 112), au moyen duquel ladite carrosserie (4) de véhicule peut être transférée dudit premier système de convoyage (14) audit second système de convoyage (56) ;
d) que ledit dispositif de transfert (66 ; 112) inclut des moyens de support (102, 104 ; 122, 124) venant en prise avec des régions de la carrosserie (4) de véhicule dont au moins l'une, en particulier, se trouve au point le plus bas de ladite carrosserie (4) de véhicule orientée horizontalement, et avec toit en partie haute,
**caractérisée par le fait que**
e) le premier système de convoyage (14) et/ou le second système de convoyage (56) est (sont) agencé(s) de façon telle qu'il(s) convoie(nt) la carrosserie (4) de véhicule sans structure de support distincte affectée à ladite carrosserie (4) de véhicule.

2. Installation selon la revendication 1, **caractérisée par le fait que** le premier système de convoyage (14) et/ou le second système de convoyage (56) inclu(en)t des éléments d'accouplement (50, 64) qui coopèrent avec des parties structurelles d'accouplement de la carrosserie (4) de véhicule.

3. Installation selon l'une des revendications 1 ou 2, **caractérisée par le fait que** les moyens de support (102, 104 ; 122, 124) du dispositif de transfert (66 ; 112) sont agencés de façon telle qu'ils coopèrent avec des régions inférieures de la carrosserie (4) de véhicule, orientée avec toit en partie haute, qui ne sont pas utilisées par le premier système de convoyage (14) ou le second système de convoyage (56).

4. Installation selon l'une des revendications 1 à 3, **caractérisée par le fait que** le dispositif de transfert (66 ; 112) inclut un système de rails porteurs (68, 106 ; 116) et un chariot (78 ; 114) qui roule sur ledit système et entraîne, avec lui, les moyens de support (102, 104 ; 122, 124) dédiés à la carrosserie (4) de véhicule.

5. Installation selon la revendication 4, **caractérisée par le fait que** l'emplacement vertical des moyens de support (102, 104 ; 122, 124) peut être réglé.

6. Installation selon la revendication 4 ou 5, **caractérisée par le fait que** le système de rails porteurs (68, 106) du dispositif de transfert (66) est réalisé sous la forme d'un convoyeur à rouleaux (68, 106), et le chariot (78) inclut un train de roulement (80) complémentaire dudit convoyeur.

7. Installation selon la revendication 6, **caractérisée par le fait que** le convoyeur à rouleaux (68, 106) est situé à distance du sol et le train de roulement (80) est rattaché à un convoyeur suspendu (92) qui inclut, à son tour, les moyens de support (102, 104) dédiés à la carrosserie (4) de véhicule.

8. Installation selon la revendication 7, **caractérisée par le fait qu'**au moins un tronçon (106) du convoyeur à rouleaux (68, 106) peut être déplacé, au moyen d'un dispositif (108) de levage/abaissement, entre des emplacements de travail supérieur et inférieur.

9. Installation selon la revendication 4 ou 5, **caractérisée par le fait que** le système de rails porteurs (116) du dispositif de transfert (112) est un système de rails au sol, et le chariot (114) est un chariot glissant (114) roulant sur ledit système.

10. Installation selon la revendication 9, **caractérisée par le fait que** le chariot glissant (114) entraîne, avec lui, un dispositif de levage/abaissement par l'intermédiaire duquel l'emplacement vertical des moyens de support (122, 124) peut être réglé.

11. Installation selon la revendication 9 ou 10, **caractérisée par le fait que** l'emplacement horizontal des moyens de support (122, 124) peut être réglé par rapport au chariot glissant (114).

12. Installation selon l'une des revendications 9 à 11, **caractérisée par le fait que** les moyens de support (122, 124) sont réalisés sous la forme d'un élément fourchu (120) pourvu d'au moins deux fourchons de support (122, 124).

13. Procédé de convoyage de carrosseries de véhicules à travers une installation dévolue au traitement de surfaces, dans lequel une carrosserie (4) de véhicule est convoyée à travers une zone de traitement en immersion (8) au moyen d'un premier système de convoyage (14), et à travers un séchoir (12) d'une zone de séchage (10) au moyen d'un second système de convoyage (56) qui diffère dudit premier système de convoyage (14),
sachant que
ladite carrosserie (4) de véhicule est transférée, à l'aide d'un dispositif de transfert (66 ; 112), dudit premier système de convoyage (14) audit second système de convoyage (56), une venue en prise étant instaurée, par des moyens de support (102, 104 ; 122, 124) dudit dispositif de transfert (66 ; 112), avec des régions de la carrosserie (4) de véhicule dont au moins l'une, en particulier, se trouve au point le plus bas de ladite carrosserie (4) de véhicule orientée horizontalement, et avec toit en partie haute,
**caractérisé par le fait que**
la carrosserie (4) de véhicule est convoyée au moyen du premier système de convoyage (14), et/ou au moyen du second système de convoyage (56), sans structure de support distincte affectée à ladite carrosserie (4) de véhicule.

14. Procédé selon la revendication 13, **caractérisé par le fait qu'**une venue en prise est instaurée, à l'aide des moyens de support (102, 104 ; 122, 124) du dispositif de transfert (66 ; 112), avec des régions inférieures de la carrosserie (4) de véhicule, orientée avec toit en partie haute, qui ne sont pas utilisées par le premier système de convoyage (14) ou le second système de convoyage (56).
